# EUROPÄISCHE PATENTANMELDUNG

(11) **EP 3 098 763 A1**
(43) Veröffentlichungstag der Anmeldung: **30.11.2016**
(21) Anmeldenummer: 16171200.5
(22) Anmeldetag: 24.05.2016
(51) Int. Cl.: G06Q 10/00

(54) **VERFAHREN ZUR DARSTELLUNG VON INFORMATIONEN VON MASCHINEN ODER ANLAGEN**

(30) Priorität: 26.05.2015 DE 102015108285
(71) Anmelder: Pester Pac Automation GmbH, 87787 Wolfertschwenden (DE)
(72) Erfinder: Haug, Hans, 87730 Bad Grönenbach (DE)
(74) Vertreter: Patentanwaltzkanzlei Hutzelmann

(57) **Zusammenfassung**

Verfahren zur Darstellung von Maschinen- und Anlageninformationen, wobei Informationen in Abhängigkeit von Baugruppen oder Teilen dargestellt werden.

## Beschreibung

Die Erfindung bezieht sich auf ein Verfahren zur Darstellung von Maschinen- und Anlageninformationen.

Gerade bei Maschinen und Anlagen ist die Auswertung von Wartungsinformationen, Wartungshinweisen, Fehlermeldungen für den Bediener äußerst schwierig. In der Regel müssen kryptische Meldungen erst anhand entsprechender Listen zugeordnet werden.

Der Erfindung liegt daher die Aufgabe zugrunde, dies signifikant zu vereinfachen und auch Zusatzinformationen anzeigen zu können.

Diese Aufgabe wird erfindungsgemäß dadurch gelöst, daß Informationen in Abhängigkeit von Baugruppen oder Teilen dargestellt werden.

Damit kann eine direkte Zusammengehörigkeit des jeweiligen Teils oder der jeweiligen Baugruppe zu den jeweiligen Informationen hergestellt werden.

Dabei hat es sich als sehr vorteilhaft erwiesen, wenn in einer Gesamtdarstellung Informationen grafisch dargestellt werden, wobei eine farbige Kennzeichnung der jeweiligen Baugruppen oder Teile erfolgen kann.

Hierdurch wird die Darstellung eindeutig. Zudem kann sich der Nutzer leichter orientieren um die jeweilige Baugruppe oder das jeweilige Teil zu identifizieren.

Eine weitere sehr vorteilhafte Weiterbildung der Erfindung liegt auch vor, wenn zur Durchführung des Verfahrens die Konstruktionsdaten der jeweiligen Maschine oder Anlage herangezogen werden, wobei eine Reduktion der Daten erfolgen kann.

Dadurch können für die Darstellung nicht notwendige Konstruktionsdaten weggelassen werden und so die benötigte Rechenleistung zur Darstellung der Daten bzw. Zeichnungen reduziert werden. Zudem ist dadurch die Möglichkeit gegeben, sensible Konstruktionsdaten, die nicht zur Darstellung benötigt werden, auszuklammern.

Gemäß einer weiteren Ausgestaltung der Erfindung ist es sehr vorteilhaft, wenn Wartungs- und/oder Instandhaltungsdaten einzelner Bauteile und/oder Baugruppen herangezogen werden.

Mit diesen Daten lassen sich Wartungs- und Instandhaltungsarbeiten vorausplanen, so daß der Betrieb so wenig wie möglich gestört wird. Zudem werden fällige Wartungs-und/oder Instandhaltungsarbeiten bauteilbezogen angezeigt. Das jeweils betroffene Bauteil und/oder Baugruppen können leicht identifiziert werden.

Ebenfalls sehr vorteilhaft ist es erfindungsgemäß, wenn Fehlerinformationen auf eine Baugruppe und/oder ein Bauteil bezogen dargestellt werden.

Damit kann eine Fehlerinformation sehr leicht zugeordnet werden.

Eine sehr vorteilhafte Fortbildung der Erfindung liegt vor, wenn die Darstellung bei Bedarf verfeinert werden kann.

Hierdurch lassen sich auch kleinere Bauteile und Baugruppen identifizieren, aber dennoch kann deren Lage bestimmt werden.

Äußerst vorteilhaft hat es sich gemäß einer weiteren Ausgestaltung der Erfindung auch erwiesen, wenn die Darstellung auf einem Computersystem erfolgt.

Damit kann die Darstellung sehr flexibel erfolgen. Durch die Datenreduktion kann auch ein handelsüblicher PC oder IndustriePC genutzt werden. Eine Workstation ist nicht notwendig.

Dabei ist es sehr vorteilhaft, wenn Fehler-, Wartungs- und/oder Instandhaltungsdaten zwischen der Maschine bzw. Anlage und dem Computersystem übertragen werden.

Dadurch kann immer der aktuelle Status dargestellt werden.

Ebenfalls sehr vorteilhaft ist es in diesem Zusammenhang, wenn die übertragenen Daten auf eine Bauteilidentifizierung und die Art der Information beschränkt werden.

Hierdurch wird die zu übertragende Datenmenge klein gehalten.

Ebenfalls sehr vorteilhaft ist es erfindungsgemäß, wenn im Computersystem die übertragenen Daten mit den Bauteilinformationen und der Darstellung verknüpft werden.

Damit wird direkt die Zuordnung zwischen den Daten und den Bauteilinformationen und der Darstellung geschaffen.

Äußerst vorteilhaft ist es gemäß einer weiteren Ausgestaltung der Erfindung auch, wenn die Darstellung der Informationen in Echtzeit erfolgt.

Dadurch kann sofort bei Auftreten von Meldungen reagiert werden.

Weiterhin hat es sich als sehr vorteilhaft erwiesen, wenn die Darstellung als dreidimensionales Modell erfolgt.

Dies entspricht dem menschlichen Vorstellungsvermögen, so daß Teile in Anlagen leicht aufgefunden werden können.

Gemäß einer Fortbildung der Erfindung ist es sehr vorteilhaft, wenn zu den Meldungen jeweils Zusatzinformationen dargestellt werden können.

Zusatzinformationen können wertvolle Hilfen geben.

Dabei ist es äußerst vorteilhaft, wenn zu Wartungs- und Instandhaltungsinformationen jeweils die notwendigen Schritte, Hinweise und/oder Bezüge zu anderen Bauteilen oder Baugruppen dargestellt werden.

Damit können die notwendigen Arbeiten erleichtert werden. Es können Arbeitsanweisungen oder auch Hinweise auf andere Baugruppen bzw. Teile gegeben werden, die gleich mitgemacht werden sollten.

Sehr vorteilhaft ist es erfindungsgemäß auch, wenn im Fehlerfall Hinweise zum Beseitigen des Fehlers dargestellt werden können.

Damit können Fehler sehr schnell beseitigt werden.

Im folgenden wird die Erfindung anhand eines Ausführungsbeispiels veranschaulicht.

Bei Maschinen und Anlagen war die Auswertung von Wartungsinformationen, Wartungshinweisen, Fehlermeldungen bislang für den Bediener äußerst schwierig. In der Regel mussten kryptische Meldungen erst anhand entsprechender Listen zugeordnet werden.

Entsprechend der neuen, hier beschriebenen Erfindung wird dies signifikant vereinfacht, indem diese Informationen einer grafischen Darstellung der Maschine bzw. Anlage zugeordnet werden.

Es werden hierzu Konstruktionsdaten, das heisst vor allem Zeichnungsdaten für eine Darstellung der Maschine bzw. Anlage genutzt. Dabei werden die Konstruktionsdaten derart reduziert, daß die Datenmenge auch mit einem handelsüblichen Personal Computer oder Industrie-PC handhabbar bleibt.

Zudem können geheime und/oder vertrauliche Konstruktionsdaten entfernt werden.

Wesentlich ist, daß die zur Darstellung genutzten Daten die relevanten Bauteile und Baugruppen der Maschine bzw. Anlage enthalten und auch eine Gesamtansicht bieten.

Muss nun eine Meldung, die Fehlermeldungen, Wartungsinformationen oder dergleichen angezeigt werden, so kann das jeweils betroffene Bauteil farbig angezeigt werden.

Hierdurch wird es einem Nutzer erleichtert, zunächst das betroffene Bauteil zu identifizieren und zu lokalisieren.

Zur Beseitigung des Fehlers oder zur Durchführung von Wartungsarbeiten können dabei Anweisungen oder Hilfestellungen angezeigt werden.

Beispielsweise können Hinweise gegeben werden, welche Bauteile oder Baugruppen zunächst entfernt werden müssen, um an das gewünschte Bauteil bzw. die Baugruppe heranzukommen.

Zudem können beispielsweise im Zusammenhang sinnvollerweise mit durchzuführende Arbeiten auch gleich angezeigt werden.

Die Darstellung der Maschine bzw. Anlage kann dabei gedreht und gezoomt werden, so daß zur benötigten Detailtiefe vorgedrungen werden kann.

Dabei können die Informationen auch entsprechend der Darstellungstiefe angezeigt werden.

Zur leichteren Navigation kann die Darstellung auch strukturiert mit mehreren Ebenen erfolgen. Die Ebenen können dann je nach Bedarf und je nach Position im Strukturbaum der Maschine bzw. Anlage ein- und ausgeblendet werden.

Auch ist es denkbar, daß Bauteile oder Baugruppen einzeln oder in Gruppen ein- und ausgeblendet werden können.

Die Informationsdaten werden zwischen der Maschine bzw. Anlage bzw. deren Steuerung und dem Anzeigerechner übertragen.

Vorteilhaft ist es dabei, wenn die übertragenen Daten auf eine Bauteilidentifizierung und die Art der Information beschränkt werden, wodurch die zu übertragende Datenmenge klein gehalten wird.

Erst im Computersystem werden die übertragenen Daten mit den Bauteilinformationen und der Darstellung verknüpft.

Durch die geringen zu übertragenden Datenmengen kann die Darstellung der Informationen in Echtzeit erfolgt.

Ebenso wird das Modell der Maschine bzw. Anlage dreidimensional, in tieferen Ebenen bei Bedarf auch zweidimensional angezeigt.

Auch hier gilt, daß durch die Beschränkung der Daten auf die wesentlichen eine Darstellung in Echtzeit erfolgen kann.

## Patentansprüche

1. Verfahren zur Darstellung von Maschinen- und Anlageninformationen, **dadurch gekennzeichnet, daß** Informationen in Abhängigkeit von Baugruppen oder Teilen dargestellt werden.

2. Verfahren nach Anspruch 1, **dadurch gekennzeichnet, daß** in einer Gesamtdarstellung Informationen grafisch dargestellt werden, wobei eine farbige Kennzeichnung der jeweiligen Baugruppen oder Teile erfolgen kann.

3. Verfahren nach Anspruch 1 oder 2, **dadurch gekennzeichnet, daß** zur Durchführung des Verfahrens die Konstruktionsdaten der jeweiligen Maschine oder Anlage herangezogen werden, wobei eine Reduktion der Daten erfolgen kann.

4. Verfahren nach Anspruch 1, 2 oder 3, **dadurch gekennzeichnet, daß** Wartungs-und/oder Instandhaltungsdaten einzelner Bauteile und/oder Baugruppen herangezogen werden.

5. Verfahren nach einem der vorangehenden Ansprüche, **dadurch gekennzeichnet, daß** Fehlerinformationen auf eine Baugruppe und/oder ein Bauteil bezogen dargestellt werden.

6. Verfahren nach einem der vorangehenden Ansprüche, **dadurch gekennzeichnet, daß** die Darstellung bei Bedarf verfeinert werden kann.

7. Verfahren nach einem der vorangehenden Ansprüche, **dadurch gekennzeichnet, daß** die Darstellung auf einem Computersystem erfolgt.

8. Verfahren nach Anspruch 7, **dadurch gekennzeichnet, daß** Fehler-, Wartungs-und/oder Instandhaltungsdaten zwischen der Maschine bzw. Anlage und dem Computersystem übertragen werden.

9. Verfahren nach Anspruch 8, **dadurch gekennzeichnet, daß** die übertragenen Daten auf eine Bauteilidentifizierung und die Art der Information beschränkt werden.

10. Verfahren nach Anspruch 8 oder 9, **dadurch gekennzeichnet, daß** im Computersystem die übertragenen Daten mit den Bauteilinformationen und der Darstellung verknüpft werden.

11. Verfahren nach einem der vorangehenden Ansprüche, **dadurch gekennzeichnet, daß** die Darstellung der Informationen in Echtzeit erfolgt.

12. Verfahren nach einem der vorangehenden Ansprüche, **dadurch gekennzeichnet, daß** die Darstellung als dreidimensionales Modell erfolgt.

13. Verfahren nach einem der vorangehenden Ansprüche, **dadurch gekennzeichnet, daß** zu den Meldungen jeweils Zusatzinformationen dargestellt werden können.

14. Verfahren nach Anspruch 13, **dadurch gekennzeichnet, daß** zu Wartungs- und Instandhaltungsinformationen jeweils die notwendigen Schritte, Hinweise und/oder Bezüge zu anderen Bauteilen oder Baugruppen dargestellt werden.

15. Verfahren nach Anspruch 13 oder 14, **dadurch gekennzeichnet, daß** im Fehlerfall Hinweise zum Beseitigen des Fehlers dargestellt werden können.
